# EUROPEAN PATENT SPECIFICATION

(11) **EP 2 399 407 B1**
(45) Date of publication and mention of the grant of the patent: **28.11.2012**
(21) Application number: 10708796.7
(22) Date of filing: 18.02.2010
(51) Int. Cl.: H04W 12/04, H04L 29/06

(54) **SECURITY SOLUTION FOR VOICE OVER LTE VIA GAN (VOLGA)**
SICHERHEITSLÖSUNG FÜR VOICE-OVER-LTE ÜBER GAN (VOLGA)
SOLUTION DE SECURITE POUR VOIX SUR LTE PAR UN RESEAU D'ACCES GENERIQUE (VOLGA)

(30) Priority: 19.02.2009 US 153683 P
(43) Date of publication of application: 28.12.2011
(73) Proprietor: Telefonaktiebolaget L M Ericsson (publ), 164 83 Stockholm (SE)
(72) Inventor: HALLENSTAL, Magnus, SE-187 50 Täby (SE); LINDHOLM, Fredrik, SE-125 74 Alvsjö (SE); JOHANSSON, Thomas, SE-616 34 Aby (SE)
(74) Representative: Sjöberg, Mats Hakan
(86) International application number: PCT/IB2010/000320
(87) International publication number: WO 2010/095022

(56) References cited:
- WO-A2-2008/023162
- ALU ET AL: "New Architecture Alternative for CS services over EPS" 3GPP DRAFT; S2-088132_COMBINED 7631_7575_V7, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miami; 20081121, 21 November 2008 (2008-11-21), XP050332479 [retrieved on 2008-11-21]
- VODAFONE: "Single Radio Voice Call Continuity" 3GPP DRAFT; S2-063159, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sophia; 20060822, 22 August 2006 (2006-08-22), XP050257057 [retrieved on 2006-08-22]
- "3rd Generation Partnership Project; Technical Specification Group GSM/EDGE Radio Access Network; Generic Access Network (GAN); Stage 2 (Release 8)" 3GPP STANDARD; 3GPP TS 43.318, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.3.0, 1 August 2008 (2008-08-01), pages 1-127, XP050378345
- "3rd Generation Partnership Project; Technical Specification Group Services and System Aspects; 3G security; Access security for IP-based services (Release 8)" 3GPP STANDARD; 3GPP TS 33.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.5.0, 1 December 2008 (2008-12-01), pages 1-113, XP050376638

## Description

### TECHNICAL FIELD

The present invention relates in general to the wireless telecommunications field and, in particular, to a VANC, a UE and methods for providing security to VoLGA traffic.

### BACKGROUND

The following abbreviations are herewith defined, at least some of which are referred to within the following description of the prior art and the present invention.
- 3GPP: 3rd Generation Partnership Project
- AAA: Authentication, Authorization & Accounting
- BSC: Base Station Controller
- BTS: Base Transceiver Station
- CBC: Cell Broadcast Centre
- CDMA: Code Division Multiple Access
- CS: Circuit Switched
- EAP-AKA: Extensible Authentication Protocol - Authentication and Key Agreement
- EAP-SIM: Extensible Authentication Protocol - Subscriber Identity Module
- EPS: Evolved Packet System
- E-UTRAN: Evolved-UMTS Radio Access Network
- GAN: Generic Access Network
- GANC: Generic Access Network Controller
- GERAN: GSM EDGE Radio Access Network
- GSM: Global System for Mobile Communications
- HLR: Home Location Register
- HO: Handoff
- HPLMN: Home Public Land Mobile Network
- HSS: Home Subscriber Server
- IMS: IP Multimedia Subsystem
- LTE: Long-Term Evolution
- MS: Mobile Station
- MSC: Mobile Switching Centre
- MME: Mobile Management Entity
- P-GW: Packet-Gateway
- PDN-GW: Packet Data Network-Gateway
- PS: Packet Switched
- RAT: Radio Access Technology
- RNC: Radio Network Controller
- SAE: System Architecture Evolution
- SEGW: Security GateWay
- SGSN: Serving GPRS Support Node
- S-GW: Serving Gateway
- SIP: Session Initiated Protocol
- SMLC: Serving Mobile Location Centre
- SRVCC: Single Radio Voice Call Continuity
- TCP: Transmission Control Protocol
- TLS: Transport Layer Security
- UE: User Equipment
- UI: User Network Interface
- UMTS: Universal Mobile Telecommunications System
- UTRAN: UMTS Radio Access Network
- VANC: VoLGA Access Network Controller
- VLR: Visitor Location Register
- VoLGA: Voice over LTE via Generic Access
- VoIP: Voice Over Internet Protocol
- VPLMN: Visited Public Land Mobile Network
- WCDMA: Wideband Code Division Multiple Access
- WLAN: Wireless Local Area Network

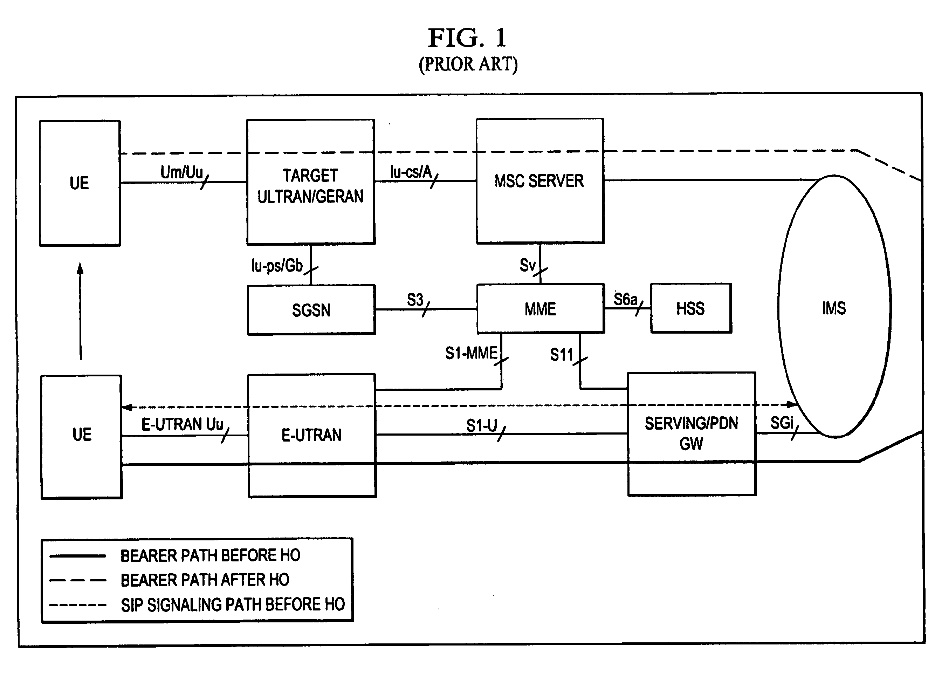

In 3GPP there are currently several different solutions that can be used to support a voice service via EPS (Evolved Packet System). For instance, one solution is IMS MMTel and another solution is CS Fallback. The IMS MMTel solution might have to use the SRVCC (Single Radio Voice Call Continuity) solution if there are no VoIP radio bearers in the whole wide area network. The SRVCC solution targets supporting IMS Voice with a mechanism to move to the GSM, WCDMA, or cdma2000 1xRTT access and continue to support the voice service using a CS service bearer thus performing a handover from the PS domain (EPS) to the CS domain. FIGURE 1 (PRIOR ART) is a diagram of an architecture which illustrates the SRVCC solution described in 3GPP TS 23.216 v. 8.1.0, "Single Radio Voice Call Continuity (SRVCC)" Sept. 24, 2008.

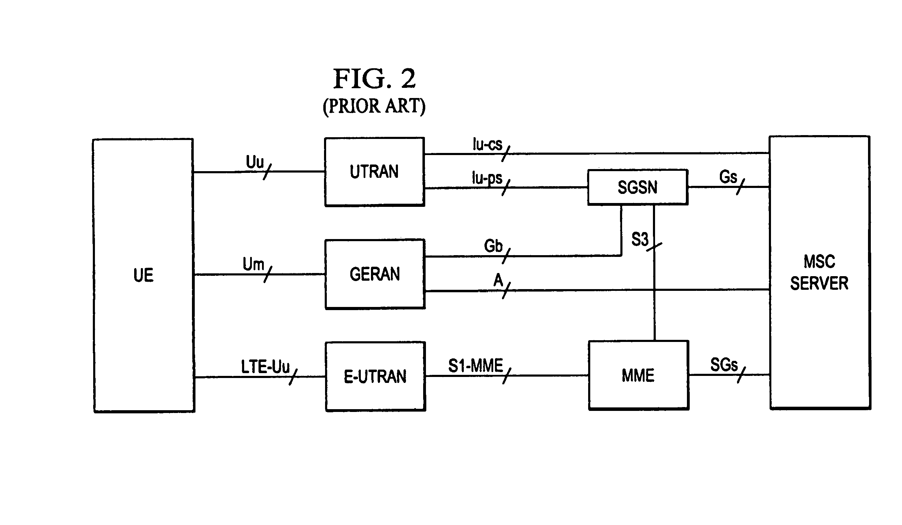

The CS Fallback solution on the other hand provides a solution where the user is registered in the CS domain even when he/she is on the LTE PS only access and when the user receives or makes a CS call his/her UE is moved over to a radio technology that supports CS service (GSM, WCDMA, or cdma2000 1xRTT). Hence, the UE has fallen back to CS. FIGURE 2 (PRIOR ART) is a diagram of an architecture which illustrates the CS Fallback solution described 3GPP TS 23.272 v. 8.1.0, "Circuit Switched Fallback in Evolved Packet System" Sept. 24, 2008.

There are a number of shortcomings associated with both the IMS MMTel solution and the CS Fallback solution. The IMS MMTel solution has the problems of having to catch-up to the service level of CS and requiring the users to migrate from the PS domain (EPS) to the CS domain. The CS fallback solution has the problems where it does not make use of LTE radio resources for the CS service, and it has a longer call setup time than what is normal in the current CS networks. To remedy these shortcomings, a number of other solutions have been presented which can be used to enable the running of the CS service over LTE.

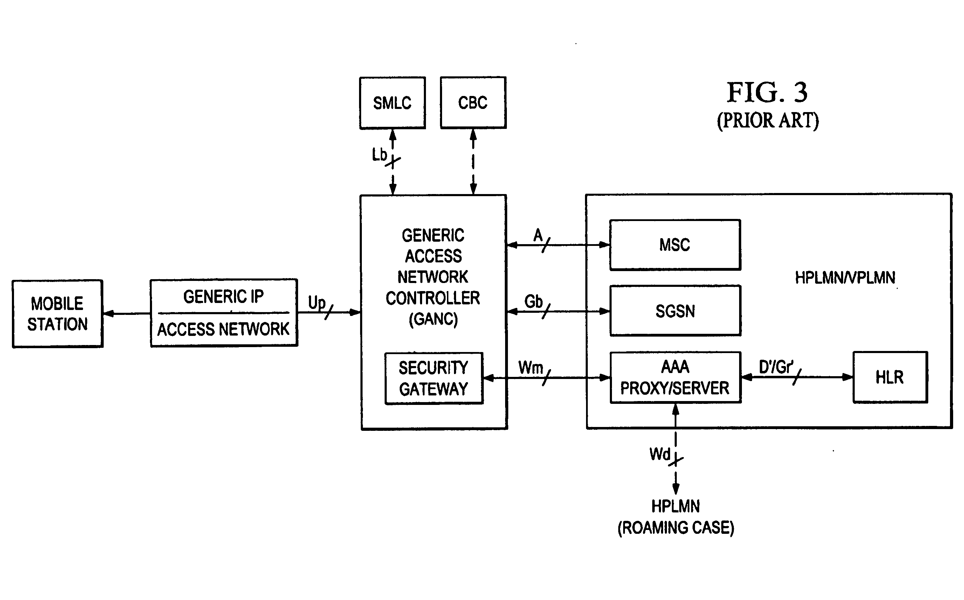

One proposed solution is to use the GAN (Generic Access Network) architecture. FIGURE 3 (PRIOR ART) is a diagram of the GAN architecture which is described in TS 43.318 v.6.12.0 Generic Access Network (GAN); Stage 2 June 16, 2008. The GAN reuses some of the mechanisms from SRVCC to give the possibility to run CS services over a generic IP access and internet, e.g. provided over a WLAN. In particular, the GAN provides an overlay access between the UE and the CS core without requiring specific enhancements or support in the network it traverses. This provides a UE with a 'virtual' connection to the core network which is already deployed by an operator. The UE and network thus reuse most of the network's existing mechanisms, deployment and operational aspects. However, for GAN to support handover the UE is assumed to use two radios, one radio for the macro network and one radio for the IP access network. This will not be the case when applied in LTE, since in this case only one radio is assumed (only one RAT can be used at one instance in time). To help address this handover problem, a forum was started that is known as the "Voice over LTE via Generic Access" forum (VoLGA forum).

The aim of VoLGA is to make traditional GSM/UMTS circuit switched (CS) services available to UEs accessing the EPS network via LTE. The VoLGA service closely resembles the GAN service. For instance, VoLGA provides a controller node known as the VANC which inserted between the IP access network (i.e., the EPS) and the 3GPP core network. Plus, the VoLGA provides an overlay access between the UE and the CS core without requiring specific enhancements or support in the network it traverses. This provides a UE with a 'virtual' connection to the core network already deployed by an operator. Thus, the UE and network reuse most of the network's existing mechanisms, deployment and operational aspects. The VoLGA reuses the GAN services and goals wherever beneficial however there are some differences between them as will be discussed next.

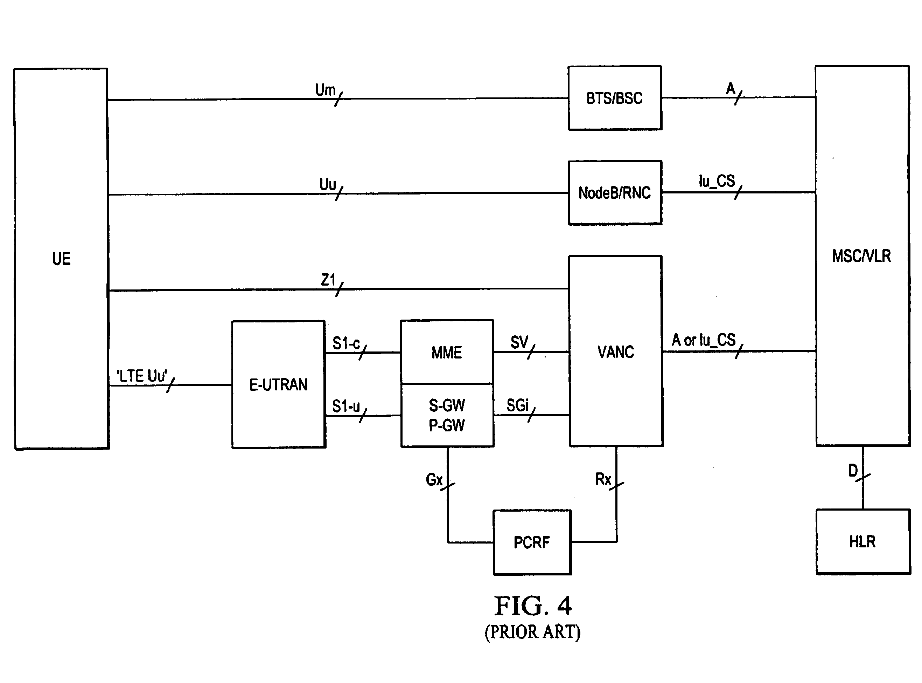

FIGURE 4 (PRIOR ART) is a diagram of the proposed architecture for VoLGA which is described in an unofficial preliminary VoLGA stage 2 specification. In VoLGA, all signalling and user plane traffic for the UE is fully transparent to the EPS access network on the Z1 interface known as the UNI (User Network Interface). This means that the EPS sees all of the VoLGA traffic as normal user plane traffic of the UE occurring over suitable EPS bearers. This also implies that the UE must attach to the access network first before the transmission of VoLGA traffic.

However, one important distinction between VoLGA services and GAN services exists. The VoLGA only supports access to CS services, not PS. Unlike GAN, the VoLGA does not support packet access to the 2G/3G SGSN. Instead, packet services are provided to the VoLGA enabled UE by directly employing the EPS system without any additional entities or functions related to VoLGA, other than the capability for combined handover of voice (including facsimile, data, etc) and non-voice packet bearers. Thus, there is no impact on the packet service delivery onto the EPS UE from VoLGA. This distinction between VoLGA service and GAN service can as discussed next have an impact on the security for VoLGA traffic.

For security, the current GAN specification uses IPsec both for control plane and user plane for the GAN traffic. In VoLGA the UE is no longer connected through Internet, thus a different security scheme might be used. In LTE, the normal way of operating would be that the radio interface is secure, however it is optional if the user plane should be secured or not. This means that the inherit security on the LTE control plane may not be used for the VoLGA control plane, since the VoLGA control plane is on the LTE/SAE user plane. The current working assumption is to use IPsec and the GAN security architecture to get the needed security for the VoLGA traffic. However, to use IPsec and reuse the GAN solution would mean that the UE is authenticated using EAP-SIM or EAP-AKA, which in principle means that there will also need to be an AAA interface from the security gateway within the VOLGA as in GAN.

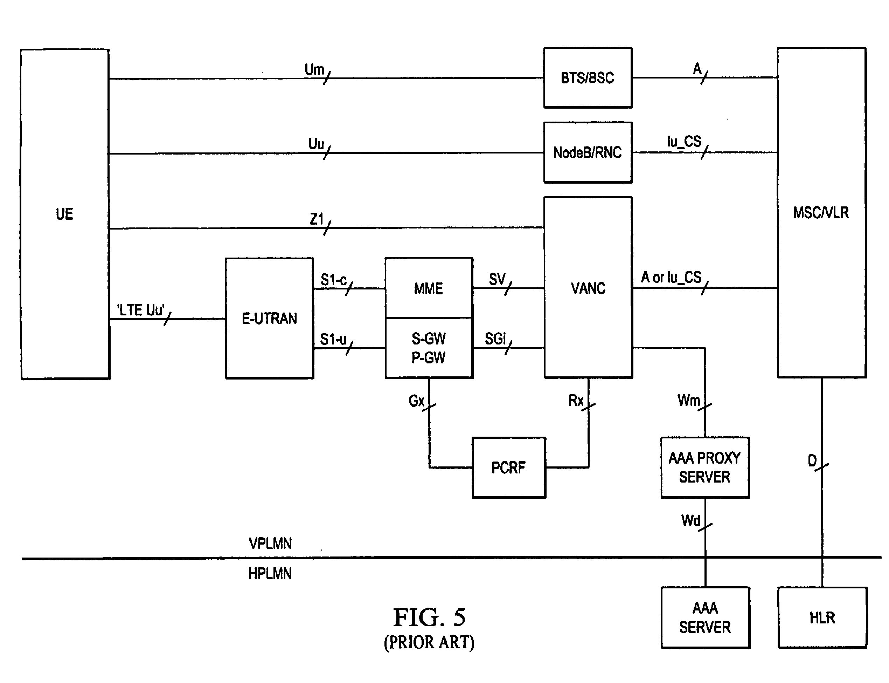

FIGURE 5 (PRIOR ART) is a diagram of a possible architecture for VoLGA in a roaming situation when the UE is authenticated using EAP-SIM or EAP-AKA where there needs to be an AAA proxy server and AAA server to use IPsec as the security gateway for the VoLGA traffic. In this architecture, there needs to be a new roaming interface Wd on the AAA lever which means that the normal roaming interfaces used in the CS domain such as the D interface cannot be used alone. The addition of a new roaming interface Wd means that a new roaming agreement needs to be made which is a cumbersome business and administration task. Accordingly, there is a need to address this shortcoming to provide security to VoLGA traffic with an UE that is in communication with the VANC and a 3GPP circuit switched node. This need and other needs are satisfied by the present invention.

WO 2008/023162 A2 (published 28 February 2008) discloses a method of providing call continuity for a mobile terminal in a telecommunications system having a packet switched domain and a circuit switched domain, the method including transferring a call from the packet switched domain to the circuit switched domain, characterised by establishing a cipher key for use in the circuit switched domain whilst the call is in the packet switched domain.

ALU et al. "New Architecture Alternative for CS services over EPS" 3GPP Draft; S2-088132_Combined 7631_7575_V7, 3RD Generation Partnership Project (3GPP), Mobile Competence Centre; 650, Route Des Lucioles; F-06921 Sophia-Antopolis Cedex, France, no. Miami; 21 November 2008 discloses an alternative architecture for providing circuit switched (CS) services over Evolved Packet System (EPS) by using an Interworking Function (IWF) between EPS and Mobile Switching Centre (MSC).

### SUMMARY

A VoLGA Access Network Controller, a User Equipment, and various methods are cited in the independent claims.

In one aspect, the present invention provides a method implemented by a VANC for providing security to VoLGA traffic. The method includes the steps of: (a) participating with the UE to establish therewith an unprotected TCP connection; (b) calculating a pre-shared key using a key (e.g., Kc or CK/IK) that was received during an authentication of the UE by a 3GPP circuit switched node (e.g., MSC), where the UE also has the pre-shared key; and (c) participating with the UE to establish therewith a TLS connection using the pre-shared key, where the TLS connection provides security to the UE's VoLGA traffic. The method enables a secure signaling channel to be established on the TLS connection between a UE and a VANC without the need for an AAA infrastructure and undesirable roaming agreements.

In another aspect, the present invention provides a VANC that provides security for VoLGA traffic by including: (1) a processor; and (2) a memory that stores processor-executable instructions where the processor interfaces with the memory and executes the processor-executable instructions to perform the following operations: (a) participating with a UE to establish therewith an unprotected TCP connection; (b) calculating a pre-shared key using a key (e.g., Kc or CK/IK) that was received during an authentication of the UE by a 3GPP circuit switched node (e.g., MSC), where the UE also has the pre-shared key; and (c) participating with the UE to establish therewith a TLS connection using the pre-shared key, where the TLS connection provides security to the UE's VoLGA traffic. The VANC enables a secure signaling channel to be established on the TLS connection with the UE without the need for an AAA infrastructure and undesirable roaming agreements.

In still yet another aspect, the present invention provides a method implemented by a UE for providing security to VoLGA traffic. The method includes the steps of: (a) establishing an unprotected TCP connection with a VANC; (b) calculating a pre-shared key using a key (e.g., Kc or CK/IK) that was derived during an authentication with a 3GPP circuit switched node (e.g., MSC), where the VANC also has the pre-shared key; and (c) establishing a TLS connection with the VANC using the pre-shared key, where the TLS connection provides security to the VoLGA traffic. The method enables a secure signaling channel to be established on the TLS connection between a UE and a VANC without the need for an AAA infrastructure and undesirable roaming agreements. In yet another aspect, the present invention provides a UE that provides security for VoLGA traffic by including: (1) a processor; and (2) a memory that stores processor-executable instructions where the processor interfaces with the memory and executes the processor-executable instructions to perform the following operations: (a) establishing an unprotected TCP connection with a VANC; (b) calculating a pre-shared key using a key (e.g., Kc or CK/IK) that was derived during an authentication with a 3GPP circuit switched node (e.g., MSC), where the VANC also has the pre-shared key; and (c) establishing a TLS connection with the VANC using the pre-shared key, where the TLS connection provides security to the VoLGA traffic. The UE enables a secure signaling channel to be established on the TLS connection with the VANC without the need for an AAA infrastructure and undesirable roaming agreements.

Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

### BRIEF DESCRIPTION OF THE DRAWINGS

A more complete understanding of the present invention may be obtained by reference to the following detailed description when taken in conjunction with the accompanying drawings:
FIGURE 1 (PRIOR ART) is a diagram of an architecture which illustrates the SRVCC solution;
FIGURE 2 (PRIOR ART) is a diagram of an architecture which illustrates the CS Fallback solution;
FIGURE 3 (PRIOR ART) is a diagram of the GAN architecture;
FIGURE 4 (PRIOR ART) is a diagram of the proposed architecture for the VoLGA solution;
FIGURE 5 (PRIOR ART) is a diagram of a possible architecture for VoLGA in a roaming situation when the UE is authenticated using EAP-SIM or EAP-AKA where there needs to be an AAA proxy server and AAA server to use IPsec as the security gateway for VOLGA traffic;
FIGURE 6 is a signal flow diagram which illustrates the steps associated with an exemplary GSM use case that provides security to the UE's VoLGA traffic in accordance with an embodiment of the present invention; and
FIGURE 7 is a signal flow diagram which illustrates the steps associated with an exemplary UMTS use case that provides security to the UE's VoLGA traffic in accordance with another embodiment of the present invention.

### DETAILED DESCRIPTION

In the following description, a brief discussion about the VANC and the VANC's method of the present invention is provided first and then a detailed discussion is provided to describe details and enable a thorough understanding about several embodiments of the present invention that can be used for providing security to VoLGA traffic between the VANC and the UE. It will be apparent to one of ordinary skill in the art having had the benefit of the present disclosure that the present invention may be practiced in other embodiments that depart from the specific details disclosed herein. Moreover, it will be apparent to one of ordinary skill in the art that descriptions of well-known architectures, devices, interfaces and signaling steps have been omitted so as not to obscure the description related to the present invention.

The VANC and the VANC's method provides security for the UE's VoLGA traffic by: (1) participating with the UE to establish therewith an unprotected Transmission Control Protocol, TCP, connection; (2) calculating a pre-shared key using a key that was received during an authentication of the UE in the CS domain with a 3GPP circuit switched node (e.g., MSC), where the UE also has the pre-shared key; and (3) participating with the UE to establish therewith a Transport Layer Security, TLS, connection using the pre-shared key, where the TLS connection provides security to the UE's VoLGA traffic. In other words, the VANC relies on a MSC authenticating the UE, and if there is a successful authentication then the VANC and UE will use the keys derived during the authentication to calculate a pre-shared key which will then be used to establish a TLS connection. A detailed discussion about how this can be implemented is provided next with respect to an exemplary GSM use case and an exemplary UMTS use case.

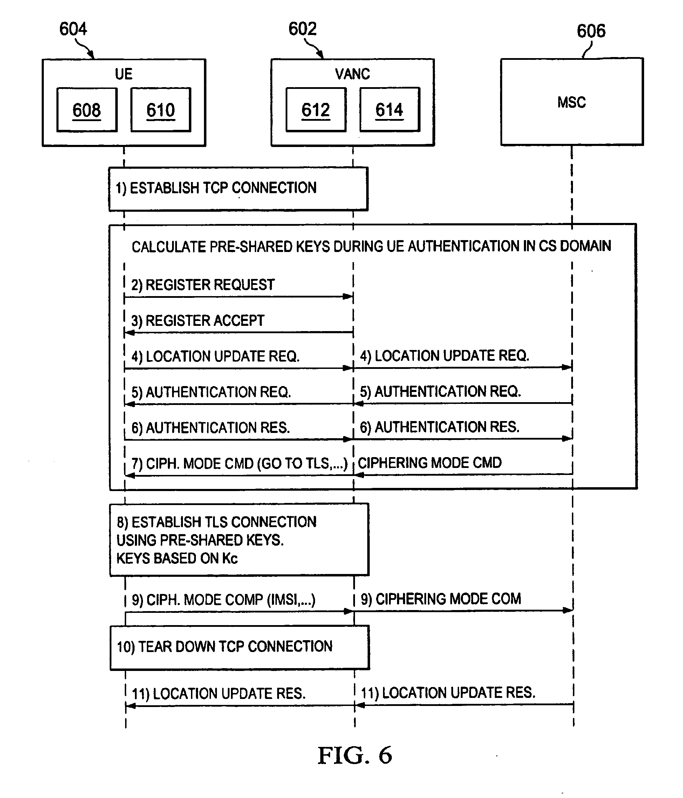

Referring to FIGURE 6, there is a signal flow diagram which illustrates the steps associated with an exemplary GSM use case for providing security to the UE's VoLGA traffic in accordance with an embodiment of the present invention. In this case, the VANC 602 is connected via the Z1 interface to the UE 604 and connected via the A interface to the MSC 606. The exemplary GSM use case can be understood with reference to the following messages that can be exchanged between the VANC 602, UE 604 and MSC 606 to provide security for the UE's VoLGA traffic (i.e. the traffic between the VANC 602 and the UE 604):
1. The UE 604 initiates the establishment of an unprotected TCP connection with the VANC 602. The VANC 602 was found during the discovery procedures.
2. The UE 604 sends a register request over the unprotected TCP connection to the VANC 602.
3. The VANC 602 sends a register accept over the unprotected TCP connection to the UE 604.
4. Once registered the UE 604 starts the location update procedure by sending a location update request over the unprotected TCP connection to the VANC 602. The VANC 602 forwards the location update request to the MSC 606.
5. The MSC 606 authenticates the UE 604 by sending an authentication request to the VANC 602 which forwards the authentication request over the unprotected TCP connection to the UE 604. The authentication request includes the normal authentication parameters for the Challenge Response procedure that GSM uses for authentication.
6. The UE 604 sends an authentication response over the unprotected TCP connection to the VANC 602. The VANC 602 forwards the authentication response to the MSC 606. In this case, the UE 604 calculates Kc and a result where the result is sent in the authentication response to the MSC 606. The MSC 606 checks the authentication response and if correct continues with commanding a ciphering mode assuming the network is configured to cipher (see step 7). If the authentication fails, the MSC 606 can either re-attempt the authentication procedure or reject the location update. If the MSC 606 rejects the authentication attempt, then the VANC 602 will de-register the UE 604.
7. The MSC 606 sends a ciphering mode command to the VANC 602. The VANC 602 forwards the ciphering mode command over the unprotected TCP connection to the UE 604. The forwarded ciphering mode command may include an indication that the signaling channel shall be encrypted (goto TLS connection). When the UE 604 receives the ciphering mode command it calculates a key based on the Kc which was an output from the authentication procedure. The VANC 602 which has received Kc from the UE 604 during the authentication process also calculates the key thus these keys are pre-shared keys.
8. The UE 604 based on the calculated key establishes a pre-shared key TLS connection with the VANC 602. Since, the VANC 602 has also calculated the key, the TLS connection establishment will be successful. However, if the UE 604 for some reason does not manage to establish the TLS connection then the VANC 602 will after a pre-set time go to GA-RC de-register state.

If the UE 604 has a Kc then the UE 604 will always use the pre-shared key calculated from Kc try to set-up the TLS connection with the VANC 602 and then start the registration procedures. However, if a new Kc is calculated during the VANC registration due to new authentication and ciphering key procedures, then there will be a re-negotiation of the pre-shared key TLS connection. In other words, if a new Kc is received then the TLS connection will be re-negotiated using the new pre-shared keys (ciphering keys) derived from the new Kc.
9. The UE 604 sends a ciphering mode complete over the TLS connection to the VANC 602. The VANC 602 forwards the ciphering mode complete to the MSC 606.
10. The unprotected TCP session is released (teared-down) after the ciphering mode complete.
11. The MSC 606 after the completion of the ciphering procedure will respond to the previously received location update request by sending a location update response to the VANC 602. The VANC 602 forwards the location update response over the TLS connection to the UE 604. At this point, the VoLGA traffic between the VANC 602 and the UE 604 is protected by the TLS connection.

In view of the foregoing, the VANC 602 can provide security for the VoLGA traffic by including: (1) a processor 608; and (2) a memory 610 that stores processor-executable instructions where the processor 608 interfaces with the memory 610 and executes the processor-executable instructions to perform the following operations: (a) participating with the UE 604 to establish therewith an unprotected TCP connection; (b) calculating a pre-shared key using a key (Kc) that was received during an authentication of the UE 604 by the MSC 606, where the UE 604 also has the pre-shared key; (c) participating with the UE 604 to establish therewith a TLS connection using the pre-shared key, where the TLS connection provides security to the UE's VoLGA traffic; and (d) tearing down the unprotected TCP connection (note: the one or more processors 608 and the at least one memory 610 can be implemented, at least partially, as software, firmware, hardware, or hard-coded logic).

The VANC 602 can perform the calculating operation (b) by: (i) receiving a register request from the UE 604 over the unprotected TCP connection; (ii) sending a register accept to the UE 604 over the unprotected TCP connection; (iii) receiving a location update request from the UE 604 over the unprotected TCP connection; (iv) forwarding the location update request to the MSC 606; (v) receiving an authentication request from the MSC 606; (vi) forwarding the authentication request to the UE 604 over the unprotected TCP connection, where the UE 604 upon receiving the authentication request calculates the key (Kc) and a result; (vii) receiving an authentication response from the UE 604 over the unprotected TCP connection, where the authentication response includes the UE calculated result; (viii) forwarding the authentication response to the MSC 606; (ix) receiving a ciphering mode command from the MSC 606; (x) forwarding the ciphering mode command to the UE 604 over the unprotected TCP connection, where the UE 604 upon receiving the ciphering mode command uses the key to calculate the pre-shared key; and (xi) calculating the pre-shared key using the key (Kc) derived by the UE 604.

The UE 604 can provide security for the VoLGA traffic by including: (1) a processor 612; and (2) a memory 614 that stores processor-executable instructions where the processor 612 interfaces with the memory 614 and executes the processor-executable instructions to perform the following operations: (a) establishing an unprotected TCP connection with the VANC 602; (b) calculating a pre-shared key using a key (Kc) that was derived during an authentication with the MSC 606, where the VANC 602 also has the pre-shared key; and (c) establishing a TLS connection with the VANC 602 using the pre-shared key, where the TLS connection provides security to the VoLGA traffic (note: the one or more processors 612 and the at least one memory 614 can be implemented, at least partially, as software, firmware, hardware, or hard-coded logic).

The UE 602 can perform the calculating operation (b) by: (i) registering with the VANC 602; (ii) sending a location update request via the VANC 602 to the MSC 606; (iii) receiving an authentication request from the MSC 606 via the VANC 602; (iv) calculating the key (Kc) and a result; (v) sending an authentication response including the result to the MSC 606 via the VANC 602; (vi) receiving a ciphering mode command from the MSC 606 via the VANC 602; and (vii) calculating the pre-shared key based on the key (Kc).

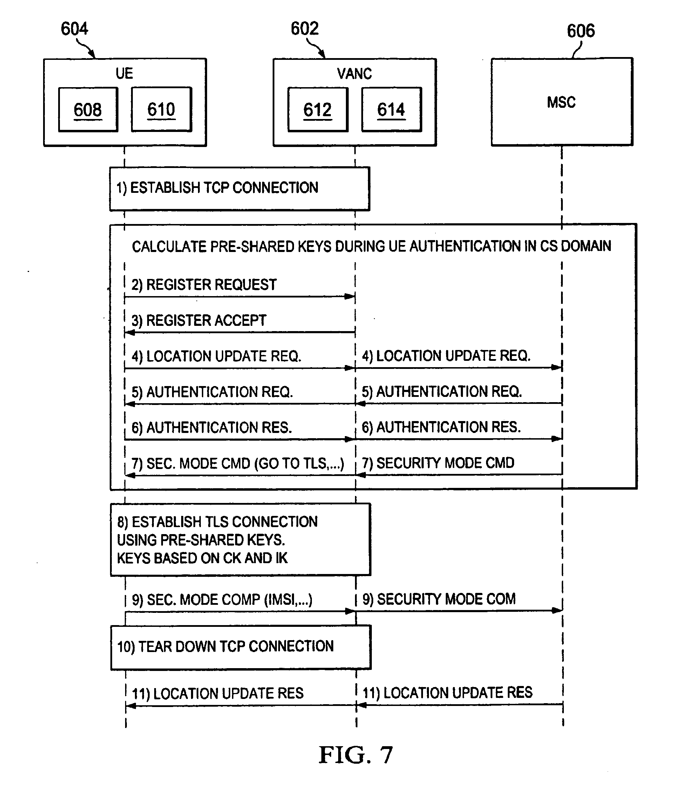

Referring to FIGURE 7, there is a signal flow diagram which illustrates the steps associated with an exemplary UMTS use case for providing security to the UE's VoLGA traffic in accordance with an embodiment of the present invention. In this case, the VANC 602 is connected via the Z1 interface to the UE 604 and connected via the A interface to the MSC 606. The exemplary UMTS use case can be understood with reference to the following messages that can be exchanged between the VANC 602, UE 604 and MSC 606 to provide security for the UE's VoLGA traffic (i.e. the traffic between the VANC 602 and the UE 604):
1. The UE 604 initiates the establishment of an unprotected TCP connection with the VANC 602. The VANC 602 was found during the discovery procedures.
2. The UE 604 sends a register request over the unprotected TCP connection to the VANC 602.
3. The VANC 602 sends a register accept over the unprotected TCP connection to the UE 604.
4. Once registered the UE 604 starts the location update procedure by sending a location update request over the unprotected TCP connection to the VANC 602. The VANC 602 forwards the location update request to the MSC 606.
5. The MSC 606 authenticates the UE 604 by sending an authentication request to the VANC 602 which forwards the authentication request over the unprotected TCP connection to the UE 604. The authentication request includes the normal authentication parameters for the Challenge Response procedure that UMTS uses for authentication.
6. The UE 604 sends an authentication response over the unprotected TCP connection to the VANC 602. The VANC 602 forwards the authentication response to the MSC 606. In this case, the UE 604 calculates cipher key CK, an integrity key IK and a result where the result is sent in the authentication response to the MSC 606. The MSC 606 checks the authentication response and if correct continues with commanding a security mode assuming the network is configured to support the security mode (see step 7). If the authentication fails, the MSC 606 can either re-attempt the authentication procedure or reject the location update. If the MSC 606 rejects the authentication attempt, then the VANC 602 will de-register the UE 604.
7. The MSC 606 sends a security mode command to the VANC 602. The VANC 602 forwards the security mode command over the unprotected TCP connection to the UE 604. The forwarded security mode command may include an indication that the signaling channel shall be encrypted (goto TLS connection). When the UE 604 receives the security mode command it calculates a key based on the CK and IK which was an output from the authentication procedure. The VANC 602 which has received CK and IK from the UE 604 during the authentication process also calculates the key thus these keys are pre-shared keys.
8. The UE 604 based on the calculated key establishes a pre-shared key TLS connection with the VANC 602. Since, the VANC 602 has also calculated the key, the TLS connection establishment will be successful. However, if the UE 604 for some reason does not manage to establish the TLS connection then the VANC 602 will after a pre-set time go to GA-RC de-register state.

If the UE 604 has a CK and IK then the UE 604 will always use the pre-shared key calculated from CK and IK try to set-up the TLS connection with the VANC 602 and then start the registration procedures. However, if a new CK and IK is calculated during the VANC registration due to new authentication and security procedures, then there will be a re-negotiation of the pre-shared key TLS connection. In other words, if a new CK and IK is received then the TLS connection will be re-negotiated using the new pre-shared keys (ciphering keys) derived from the new CK and IK.
9. The UE 604 sends a security mode complete over the TLS connection to the VANC 602. The VANC 602 forwards the security mode complete to the MSC 606.
10. The unprotected TCP session is released (teared-down) after the security mode complete.
11. The MSC 606 after the completion of the security procedure will respond to the previously received location update request by sending a location update response to the VANC 602. The VANC 602 forwards the location update response over the TLS connection to the UE 604. At this point, the VoLGA traffic between the VANC 602 and the UE 604 is protected by the TLS connection.

In view of the foregoing, the VANC 602 can provide security for the VoLGA traffic by including: (1) a processor 608; and (2) a memory 610 that stores processor-executable instructions where the processor 608 interfaces with the memory 610 and executes the processor-executable instructions to perform the following operations: (a) participating with the UE 604 to establish therewith an unprotected TCP connection; (b) calculating a pre-shared key using a key (CK and IK) that was received during an authentication of the UE 604 by the MSC 606, where the UE 604 also has the pre-shared key; (c) participating with the UE 604 to establish therewith a TLS connection using the pre-shared key, where the TLS connection provides security to the UE's VoLGA traffic; and (d) tearing down the unprotected TCP connection (note: the one or more processors 608 and the at least one memory 610 can be implemented, at least partially, as software, firmware, hardware, or hard-coded logic).

The VANC 602 can perform the calculating operation (b) by: (i) receiving a register request from the UE 604 over the unprotected TCP connection; (ii) sending a register accept to the UE 604 over the unprotected TCP connection; (iii) receiving a location update request from the UE 604 over the unprotected TCP connection; (iv) forwarding the location update request to the MSC 606; (v) receiving an authentication request from the MSC 606; (vi) forwarding the authentication request to the UE 604 over the unprotected TCP connection, where the UE 604 upon receiving the authentication request calculates the key (CK and IK) and a result; (vii) receiving an authentication response from the UE 604 over the unprotected TCP connection, where the authentication response includes the UE calculated result; (viii) forwarding the authentication response to the MSC 606; (ix) receiving a security mode command from the MSC 606; (x) forwarding the security mode command to the UE 604 over the unprotected TCP connection, where the UE 604 upon receiving the security mode command uses the key (CK and IK) to calculate the pre-shared key; and (xi) calculating the pre-shared key using the key (CK and IK) derived by the UE 604.

The UE 604 can provide security for the VoLGA traffic by including: (1) a processor 612; and (2) a memory 614 that stores processor-executable instructions where the processor 612 interfaces with the memory 614 and executes the processor-executable instructions to perform the following operations: (a) establishing an unprotected TCP connection with the VANC 602; (b) calculating a pre-shared key using a key (CK and IK) that was derived during an authentication with the MSC 606, where the VANC 602 also has the pre-shared key; and (c) establishing a TLS connection with the VANC 602 using the pre-shared key, where the TLS connection provides security to the VoLGA traffic (note: the one or more processors 612 and the at least one memory 614 can be implemented, at least partially, as software, firmware, hardware, or hard-coded logic).

The UE 602 can perform the calculating operation (b) by: (i) registering with the VANC 602; (ii) sending a location update request via the VANC 602 to the MSC 606; (iii) receiving an authentication request from the MSC 606 via the VANC 602; (iv) calculating the key (CK and IK) and a result; (v) sending an authentication response including the result to the MSC 606 via the VANC 602; (vi) receiving a security mode command from the MSC 606 via the VANC 602; and (vii) calculating the pre-shared key based on the key (CK and IK).

Although several embodiments of the present invention have been illustrated in the accompanying Drawings and described in the foregoing Detailed Description, it should be understood that the invention is not limited to the disclosed embodiments, but instead is also capable of numerous rearrangements, modifications and substitutions without departing from the present invention that as has been set forth and defined within the following claims.

## Claims

1. A method implemented by a VoLGA Access Network Controller, VANC (602), for providing security to Voice over Long-Term Evolution via Generic Access, VoLGA, traffic with an User Equipment, UE (604), the VANC is also in communication with a 3rd Generation Partnership Project, 3GPP, circuit switched node (606), the method comprising the steps of:
participating with the UE to establish therewith an unprotected Transmission Control Protocol, TCP, connection;
calculating a pre-shared key using a key that was received during an authentication of the UE by the 3GPP circuit switch node using the unprotected TCP connection, where the UE also has the pre-shared key; and
participating with the UE to establish therewith a Transport Layer Security, TLS, connection using the pre-shared key, where the TLS connection provides security to the VoLGA traffic associated with the UE.

2. The method of claim 1, further comprising the step of tearing down the unprotected TCP connection.

3. The method of claim 1, further comprising a step of de-registering the UE if the 3GPP circuit switched node rejects the authentication of the UE.

4. The method of claim 1, wherein the calculating step further includes:
receiving a register request from the UE over the unprotected TCP connection;
sending a register accept to the UE over the unprotected TCP connection;
receiving a location update request from the UE over the unprotected TCP connection;
forwarding the location update request to the 3GPP circuit switched node;
receiving an authentication request from the 3GPP circuit switched node;
forwarding the authentication request to the UE over the unprotected TCP connection, the UE upon receiving the authentication request calculates the key and a result;
receiving an authentication response from the UE over the unprotected TCP connection, where the authentication response includes the UE calculated result;
forwarding the authentication response to the 3GPP circuit switched node;
receiving a ciphering-security mode command from the 3GPP circuit switched node;
forwarding the ciphering-security mode command to the UE over the unprotected TCP connection, the UE upon receiving the ciphering-security mode command uses the key to calculate the pre-shared key; and
calculating the pre-shared key using the key derived by the UE.

5. The method of claim 1, wherein the 3GPP circuit switched node is a Mobile Switching Centre, MSC, and the key is Kc.

6. The method of claim 1, wherein the 3GPP node is a Mobile Switching Centre, MSC, and the key includes a cipher key CK and an integrity key IK.

7. A VoLGA Access Network Controller, VANC (602), adapted to provide security to Voice over Long-Term Evolution via Generic Access, VoLGA, traffic with an User Equipment, UE (604), the VANC is also in communication with a 3rd Generation Partnership Project, 3GPP, circuit switched node (606), the VANC comprising:
a processor (608); and
a memory (610) adapted to store processor-executable instructions where the processor is adapted to interface with the memory and execute the processor-executable instructions to:
participate with the UE to establish therewith an unprotected Transmission Control Protocol, TCP, connection;
calculate a pre-shared key using a key that was received during an authentication of the UE by the 3GPP circuit switched node using the unprotected TCP connection, where the UE also has the pre-shared key; and
participate with the UE to establish therewith a Transport Layer Security, TLS, connection using the pre-shared key, where the TLS connection provides security to the VoLGA traffic associated with the UE.

8. The VANC of claim 7, wherein the processor is further adapted to execute the processor-executable instructions to:
tear down the unprotected TCP connection.

9. The VANC of claim 7, wherein the processor is further adapted to execute the processor-executable instructions to:
de-register the UE if the 3GPP circuit switched node rejects the authentication of the UE.

10. The VANC of claim 7, wherein the processor is further adapted to execute the processor-executable instructions to:
receive a register request from the UE over the unprotected TCP connection;
send a register accept to the UE over the unprotected TCP connection;
receive a location update request from the UE over the unprotected TCP connection;
forward the location update request to the 3GPP circuit switched node;
receive an authentication request from the 3GPP circuit switched node;
forward the authentication request to the UE over the unprotected TCP connection, the UE is adapted to receive the authentication request and calculate the key and a result;
receive an authentication response from the UE over the unprotected TCP connection, where the authentication response includes the UE calculated result;
forward the authentication response to the 3GPP circuit switched node;
receive a ciphering-security mode command from the 3GPP circuit switched node;
forward the ciphering-security mode command to the UE over the unprotected TCP connection, the UE is adapted to receive the ciphering-security mode command and use the key to calculate the pre-shared key; and
calculate the pre-shared key using the key derived by the UE.

11. The VANC of claim 7, wherein the 3GPP circuit switched node is a Mobile Switching Centre, MSC, and the key is Kc.

12. The VANC of claim 7, wherein the 3GPP circuit switched node is a Mobile Switching Centre, MSC, and the key includes a cipher key CK and an integrity key IK.

13. A method implemented by a User Equipment, UE (604), for providing security for Voice over Long-Term Evolution via Generic Access, VoLGA, traffic with a VoLGA Access Network Controller, VANC (602) that is also in communication with a 3rd Generation Partnership Project, 3GPP, circuit switched node (606), the method comprising the steps of:
establishing an unprotected Transmission Control Protocol, TCP, connection with the VANC;
calculating a pre-shared key using a key that was derived during an authentication with the 3GPP circuit switched node using the unprotected TCP connection, where the VANC also has the pre-shared key; and
establishing a Transport Layer Security, TLS, connection with the VANC using the pre-shared key, where the TLS connection provides security to the VoLGA traffic associated with the VANC.

14. The method of claim 13, wherein the calculating step further includes:
registering with the VANC;
sending a location update request via the VANC to the 3GPP circuit switched node;
receiving an authentication request from the 3GPP node via the VANC;
calculating the key and a result;
sending an authentication response including the result to the 3GPP circuit switched node via the VANC;
receiving a ciphering-security mode command from the 3GPP circuit switched node via the VANC; and
calculating the pre-shared key based on the key.

15. The method of claim 13, wherein the key is Kc when the 3GPP circuit switched node is a Mobile Switching Centre, MSC.

16. The method of claim 13, wherein the key includes a cipher key CK and an integrity key IK when the 3GPP circuit switched node is a Mobile Switching Centre, MSC.

17. A User Equipment, UE (604), adapted to provide security for Voice over Long-Term Evolution via Generic Access, VoLGA, traffic with a VoLGA Access Network Controller, VANC (602) that is also in communication with a 3rd Generation Partnership Project, 3GPP, circuit switched node (606), the UE comprising:
a processor (612); and
a memory (614) adapted to store processor-executable instructions where the processor is adapted to interface with the memory and execute the processor-executable instructions to:
establish an unprotected Transmission Control Protocol, TCP, connection with the VANC;
calculate a pre-shared key using a key that was derived during an authentication with the 3GPP circuit switched node using the unprotected TCP connection, where the VANC also has the pre-shared key; and
establish a Transport Layer Security, TLS, connection with the VANC using the pre-shared key, where the TLS connection provides security to the VoLGA traffic associated with the VANC.

18. The UE of claim 17, wherein the processor is further adapted to execute the processor-executable instructions and calculate the pre-shared key by:
register with the VANC;
send a location update request via the VANC to the 3GPP circuit switched node;
receive an authentication request from the 3GPP node via the VANC;
calculate the key and a result;
send an authentication response including the result to the 3GPP circuit switched node via the VANC;
receive a ciphering-security mode command from the 3GPP circuit switched node via the VANC; and
calculate the pre-shared key based on the key.

19. The UE of claim 17, wherein the key is Kc when the 3GPP circuit switched node is a Mobile Switching Centre, MSC.

20. The UE of claim 17, wherein the key includes a cipher key CK and an integrity key IK when the 3GPP circuit switched node is a Mobile Switching Centre, MSC.

## Patentansprüche

1. Verfahren, implementiert von einem VoLGA-Zugangsnetzcontroller, VANC (602), zum Bereitstellen von Sicherheit für VoLGA(Sprache über LTE über generischen Zugang)-Verkehr mit einem Benutzergerät, UE (604), wobei der VANC auch in Kommunikation mit einem leitungsvermittelten 3GPP(3rd Generation Partnership Project)-Knoten (606) steht, wobei das Verfahren die folgenden Schritte umfasst:
Zusammenarbeit mit dem UE, um damit eine ungeschützte TCP(Übertragungssteuerungsprotokoll)-Verbindung aufzubauen;
Berechnen eines vorher vereinbarten Schlüssels unter Verwendung eines Schlüssels, der während einer Authentifikation des UE durch den leitungsvermittelten 3GPP-Knoten unter Verwendung der ungeschützten TCP-Verbindung empfangen wurde, wo das UE auch den vorher vereinbarten Schlüssel hat; und
Zusammenarbeit mit dem UE, um damit unter Verwendung des vorher vereinbarten Schlüssels eine TLS(Transportschichtsicherheit)-Verbindung aufzubauen, wo die TLS-Verbindung Sicherheit für den mit dem UE assoziierten VoLGA-Verkehr bereitstellt.

2. Verfahren nach Anspruch 1, außerdem den Schritt umfassend, die ungeschützte TCP-Verbindung abzubauen.

3. Verfahren nach Anspruch 1, außerdem einen Schritt umfassend, das UE zu deregistrieren, falls der leitungsvermittelte 3GPP-Knoten die Authentifikation des UE zurückweist.

4. Verfahren nach Anspruch 1, worin der Berechnungsschritt außerdem enthält:
Empfangen einer Registrieranforderung vom UE über die ungeschützte TCP-Verbindung;
Senden einer Registrierannahme an das UE über die ungeschützte TCP-Verbindung;
Empfangen einer Standortaktualisierungsanforderung vom UE über die ungeschützte TCP-Verbindung:
Weiterleiten der Standortaktualisierungsanforderung an den leitungsvermittelten 3 GPP-Knoten;
Empfangen einer Authentifikationsanforderung vom leitungsvermittelten 3GPP-Knoten;
Weiterleiten der Authentifikationsanforderung an das UE über die ungeschützte TCP-Verbindung, wobei das UE nach Empfang der Authentifikationsanforderung den Schlüssel und ein Ergebnis berechnet; Empfangen einer Authentifikationsantwort vom UE über die ungeschützte TCP-Verbindung, wo die Authentifikationsantwort das vom UE berechnete Ergebnis enthält;
Weiterleiten der Authentifikationsantwort an den leitungsvermittelten 3GPP-Knoten;
Empfangen eines Verschlüsselungssicherheitsmodus-Befehls vom leitungsvermittelten 3GPP-Knoten;
Weiterleiten des Verschlüsselungssicherheitsmodus-Befehls an das UE über die ungeschützte TCP-Verbindung, wobei das UE nach Empfang des Verschlüsselungssicherheitsmodus-Befehls den Schlüssel verwendet, um den vorher vereinbarten Schlüssel zu berechnen; und
Berechnen des vorher vereinbarten Schlüssels unter Verwendung des vom UE abgeleiteten Schlüssels.

5. Verfahren nach Anspruch 1, worin der leitungsvermittelte 3GPP-Knoten eine Mobilfunkvermittlungsstelle, MSC, ist und der Schlüssel Kc ist.

6. Verfahren nach Anspruch 1, worin der 3GPP-Knoten eine Mobilfunkvermittlungsstelle, MSC, ist und der Schlüssel einen Verschlüsselungsschlüssel CK und einen Integritätsschlüssel IK enthält.

7. VoLGA-Zugangsnetzcontroller, VANC (602), angepasst zum Bereitstellen von Sicherheit für VoLGA(Sprache über LTE über generischen Zugang)-Verkehr mit einem Benutzergerät, UE (604), wobei der VANC auch in Kommunikation mit einem leitungsvermittelten 3GPP(3rd Generation Partnership Project)-Knoten (606) steht, wobei der VANC umfasst:
einen Prozessor (608); und
einen Speicher (610), angepasst zum Speichern von prozessorausführbaren Anweisungen, wo der Prozessor dazu angepasst ist, sich an den Speicher kompatibel anzuschließen und die prozessorausführbaren Anweisungen auszuführen zum:
Zusammenarbeit mit dem UE, um damit eine ungeschützte TCP(Übertragungssteuerungsprotokoll)-Verbindung aufzubauen;
Berechnen eines vorher vereinbarten Schlüssels unter Verwendung eines Schlüssels, der während einer Authentifikation des UE durch den leitungsvermittelten 3GPP-Knoten unter Verwendung der ungeschützten TCP-Verbindung empfangen wurde, wo das UE auch den vorher vereinbarten Schlüssel hat; und
Zusammenarbeit mit dem UE, um damit unter Verwendung des vorher vereinbarten Schlüssels eine TLS(Transportschichtsicherheit)-Verbindung aufzubauen, wo die TLS-Verbindung Sicherheit für den mit dem UE assoziierten VoLGA-Verkehr bereitstellt.

8. VANC nach Anspruch 7, worin der Prozessor außerdem dazu angepasst ist, die prozessorausführbaren Anweisungen auszuführen, um:
die ungeschützte TCP-Verbindung abzubauen.

9. VANC nach Anspruch 7, worin der Prozessor außerdem dazu angepasst ist, die prozessorausführbaren Anweisungen auszuführen, um:
das UE zu deregistrieren, falls der leitungsvermittelte 3GPP-Knoten die Authentifikation des UE zurückweist.

10. VANC nach Anspruch 7, worin der Prozessor außerdem dazu angepasst ist, die prozessorausführbaren Anweisungen auszuführen zum:
Empfangen einer Registrieranforderung vom UE über die ungeschützte TCP-Verbindung;
Senden einer Registrierannahme an das UE über die ungeschützte TCP-Verbindung;
Empfangen einer Standortaktualisierungsanforderung vom UE über die ungeschützte TCP-Verbindung:
Weiterleiten der Standortaktualisierungsanforderung an den leitungsvermittelten 3 GPP-Knoten;
Empfangen einer Authentifikationsanforderung vom leitungsvermittelten 3GPP-Knoten;
Weiterleiten der Authentifikationsanforderung an das UE über die ungeschützte TCP-Verbindung, wobei das UE dazu angepasst ist, die Authentifikationsanforderung zu empfangen und den Schlüssel und ein Ergebnis zu berechnen;
Empfangen einer Authentifikationsantwort vom UE über die ungeschützte TCP-Verbindung, wo die Authentifikationsantwort das vom UE berechnete Ergebnis enthält;
Weiterleiten der Authentifikationsantwort an den leitungsvermittelten 3GPP-Knoten;
Empfangen eines Verschlüsselungssicherheitsmodus-Befehls vom leitungsvermittelten 3GPP-Knoten;
Weiterleiten des Verschlüsselungssicherheitsmodus-Befehls an das UE über die ungeschützte TCP-Verbindung, wobei das UE dazu angepasst ist, den Verschlüsselungssicherheitsmodus-Befehl zu empfangen und den Schlüssel zu verwenden, um den vorher vereinbarten Schlüssel zu berechnen; und
Berechnen des vorher vereinbarten Schlüssels unter Verwendung des vom UE abgeleiteten Schlüssels.

11. VANC nach Anspruch 7, worin der leitungsvermittelte 3GPP-Knoten eine Mobilfunkvermittlungsstelle, MSC, ist und der Schlüssel Kc ist.

12. VANC nach Anspruch 7, worin der leitungsvermittelte 3GPP-Knoten eine Mobilfunkvermittlungsstelle, MSC, ist und der Schlüssel einen Verschlüsselungsschlüssel CK und einen Integritätsschlüssel IK enthält.

13. Verfahren, von einem Benutzergerät, UE (604), implementiert, um Sicherheit für VoLGA(Sprache über LTE über generischen Zugang)-Verkehr mit einem VoLGA-Zugangsnetzcontroller, VANC (602), bereitzustellen, der auch in Kommunikation mit einem leitungsvermittelten 3GPP(3rd Generation Partnership Project)-Knoten (606) steht, wobei das Verfahren die folgenden Schritte umfasst:
Aufbauen einer ungeschützten TCP(Übertragungssteuerungsprotokoll)-Verbindung mit dem VANC;
Berechnen eines vorher vereinbarten Schlüssels unter Verwendung eines Schlüssels, der während einer Authentifikation mit dem leitungsvermittelten 3GPP-Knoten unter Verwendung der ungeschützten TCP-Verbindung abgeleitet wurde, wo der VANC auch den vorher vereinbarten Schlüssel hat; und
Aufbauen einer TLS(Transportschichtsicherheit)-Verbindung mit dem VANC unter Verwendung des vorher vereinbarten Schlüssels, wo die TLS-Verbindung Sicherheit für den mit dem VANC assoziierten VoLGA-Verkehr bereitstellt.

14. Verfahren nach Anspruch 13, worin der Berechnungsschritt außerdem enthält:
Registrieren beim VANC;
Senden einer Standortaktualisierungsanforderung über den VANC an den leitungsvermittelten 3GPP-Knoten;
Empfangen einer Authentifikationsanforderung über den VANC vom 3GPP-Knoten;
Berechnen des Schlüssels und eines Ergebnisses;
Senden einer Authentifikationsantwort einschließlich des Ergebnisses über den VANC an den leitungsvermittelten 3GPP-Knoten;
Empfangen eines Verschlüsselungssicherheitsmodus-Befehls über den VANC vom leitungsvermittelten 3GPP-Knoten; und
Berechnen des vorher vereinbarten Schüssels auf der Basis des Schlüssels.

15. Verfahren nach Anspruch 13, worin der Schlüssel Kc ist, wenn der leitungsvermittelte 3GPP-Knoten eine Mobilfunkvermittlungsstelle, MSC, ist.

16. Verfahren nach Anspruch 13, worin der Schlüssel einen Verschlüsselungsschlüssel CK und einen Integritätsschlüssel IK enthält, wenn der leitungsvermittelte 3GPP-Knoten eine Mobilfunkvermittlungsstelle, MSC, ist.

17. Benutzergerät, UE (604), dazu angepasst, Sicherheit für VoLGA(Sprache über LTE über generischen Zugang)-Verkehr mit einem VoLGA-Zugangsnetzcontroller, VANC (602), bereitzustellen, der auch in Kommunikation mit einem leitungsvermittelten 3GPP(3rd Generation Partnership Project)-Knoten (606) steht, wobei das UE umfasst:
einen Prozessor (612); und
einen Speicher (614), angepasst zum Speichern von prozessorausführbaren Anweisungen, wo der Prozessor dazu angepasst ist, sich an den Speicher kompatibel anzuschließen und die prozessorausfiihrbaren Anweisungen auszuführen zum:
Aufbauen einer ungeschützten TCP(Übertragungssteuerungsprotokoll)-Verbindung mit dem VANC;
Berechnen eines vorher vereinbarten Schlüssels unter Verwendung eines Schlüssels, der während einer Authentifikation mit dem leitungsvermittelten 3GPP-Knoten unter Verwendung der ungeschützten TCP-Verbindung abgeleitet wurde, wo der VANC auch den vorher vereinbarten Schlüssel hat; und
Aufbauen einer TLS(Transportschichtsicherheit)-Verbindung mit dem VANC unter Verwendung des vorher vereinbarten Schlüssels, wo die TLS-Verbindung Sicherheit für den mit dem VANC assoziierten VoLGA-Verkehr bereitstellt.

18. UE nach Anspruch 17, worin der Prozessor außerdem dazu angepasst ist, die prozessorausführbaren Anweisungen auszuführen und den vorher vereinbarten Schlüssel zu berechnen durch:
Registrieren beim VANC;
Senden einer Standortaktualisierungsanforderung über den VANC an den leitungsvermittelten 3GPP-Knoten;
Empfangen einer Authentifikationsanforderung über den VANC vom 3GPP-Knoten;
Berechnen des Schlüssels und eines Ergebnisses;
Senden einer Authentifikationsantwort einschließlich des Ergebnisses über den VANC an den leitungsvermittelten 3GPP-Knoten;
Empfangen eines Verschlüsselungssicherheitsmodus-Befehls über den VANC vom leitungsvermittelten 3GPP-Knoten; und
Berechnen des vorher vereinbarten Schüssels auf der Basis des Schlüssels.

19. UE nach Anspruch 17, worin der Schlüssel Kc ist, wenn der leitungsvermittelte 3GPP-Knoten eine Mobilfunkvermittlungsstelle, MSC, ist.

20. UE nach Anspruch 17, worin der Schlüssel einen Verschlüsselungsschlüssel CK und einen Integritätsschlüssel IK enthält, wenn der leitungsvermittelte 3GPP-Knoten eine Mobilfunkvermittlungsstelle, MSC, ist.

## Revendications

1. Procédé mis en oeuvre par un contrôleur de réseau d'accès VoLGA, VANC (602), en vue de fournir une sécurité à du trafic voix sur évolution à long terme par accès générique, VoLGA, avec un équipement d'utilisateur, UE (604), le contrôleur VANC étant également en communication avec un noeud à commutation de circuit de projet de partenariat de troisième génération 3GPP (606), le procédé comportant les étapes ci-dessous consistant à :
collaborer avec l'équipement UE en vue d'établir avec celui-ci une connexion de protocole de commande de transmission TCP non protégée ;
calculer une clé prépartagée en utilisant une clé qui a été reçue au cours d'une authentification de l'équipement UE par le noeud à commutation de circuit 3GPP utilisant la connexion de protocole TCP non protégée, où l'équipement UE présente également la clé prépartagée ; et
collaborer avec l'équipement UE en vue d'établir avec celui-ci une connexion de sécurité de la couche de transport, TLS, en utilisant la clé prépartagée, où la connexion de sécurité TLS fournit une sécurité au trafic VoLGA associé à l'équipement UE.

2. Procédé selon la revendication 1, comportant en outre l'étape consistant à libérer la connexion de protocole TCP non protégée.

3. Procédé selon la revendication 1, comportant en outre une étape consistant à radier l'équipement UE si le noeud à commutation de circuit 3GPP rejette l'authentification de l'équipement UE.

4. Procédé selon la revendication 1, dans lequel l'étape de calcul comporte en outre les étapes ci-dessous consistant à :
recevoir une demande d'enregistrement en provenance de l'équipement UE sur la connexion de protocole TCP non protégée ;
envoyer une acceptation d'enregistrement à l'équipement UE sur la connexion de protocole TCP non protégée ;
recevoir une demande de mise à jour de localisation en provenance de l'équipement UE sur la connexion de protocole TCP non protégée ;
acheminer la demande de mise à jour de localisation au noeud à commutation de circuit 3GPP ;
recevoir une demande d'authentification en provenance du noeud à commutation de circuit 3GPP ;
acheminer la demande d'authentification à l'équipement UE sur la connexion de protocole TCP non protégée, l'équipement UE, suite à la réception de la demande d'authentification, calculant la clé et un résultat ;
recevoir une réponse d'authentification en provenance de l'équipement UE sur la connexion de protocole TCP non protégée, où la réponse d'authentification inclut le résultat calculé par l'équipement UE ;
acheminer la réponse d'authentification au noeud à commutation de circuit 3GPP ;
recevoir une commande de mode de sécurité - chiffrement en provenance du noeud à commutation de circuit 3GPP ;
acheminer la commande de mode de sécurité - chiffrement à l'équipement UE sur la connexion de protocole TCP non protégée, l'équipement UE, suite à la réception de la commande de mode de sécurité - chiffrement, utilisant la clé en vue de calculer la clé prépartagée ; et
calculer la clé prépartagée en utilisant la clé dérivée par l'équipement UE.

5. Procédé selon la revendication 1, dans lequel le noeud à commutation de circuit 3GPP est un centre de commutation du service des mobiles, MSC, et la clé est une clé Kc.

6. Procédé selon la revendication 1, dans lequel le noeud 3 GPP est un centre de commutation du service des mobiles, MSC, et la clé inclut une clé de chiffrement CK et une clé d'intégrité IK.

7. Contrôleur de réseau d'accès VoLGA, VANC (602), apte à fournir une sécurité à du trafic voix sur évolution à long terme par accès générique, VoLGA, avec un équipement d'utilisateur, UE (604), le contrôleur VANC étant également en communication avec un noeud à commutation de circuit de projet de partenariat de troisième génération 3GPP (606), le contrôleur VANC comportant :
un processeur (608) ; et
une mémoire (610) apte à stocker des instructions exécutables par un processeur, où le processeur est apte à s'interfacer avec la mémoire, et à exécuter les instructions exécutables par un processeur pour :
collaborer avec l'équipement UE en vue d'établir avec celui-ci une connexion de protocole de commande de transmission TCP non protégée ;
calculer une clé prépartagée en utilisant une clé qui a été reçue au cours d'une authentification de l'équipement UE par le noeud à commutation de circuit 3GPP utilisant la connexion de protocole TCP non protégée, où l'équipement UE présente également la clé prépartagée ; et
collaborer avec l'équipement UE en vue d'établir avec celui-ci une connexion de sécurité de la couche de transport, TLS, en utilisant la clé prépartagée, où la connexion de sécurité TLS fournit une sécurité au trafic VoLGA associé à l'équipement UE.

8. Contrôleur VANC selon la revendication 7, dans lequel le processeur est en outre apte à exécuter les instructions exécutables par un processeur pour :
libérer la connexion de protocole TCP non protégée.

9. Contrôleur VANC selon la revendication 7, dans lequel le processeur est en outre apte à exécuter les instructions exécutables par un processeur pour :
radier l'équipement UE si le noeud à commutation de circuit 3GPP rejette l'authentification de l'équipement UE.

10. Contrôleur VANC selon la revendication 7, dans lequel le processeur est en outre apte à exécuter les instructions exécutables par un processeur pour :
recevoir une demande d'enregistrement en provenance de l'équipement UE sur la connexion de protocole TCP non protégée ;
envoyer une acceptation d'enregistrement à l'équipement UE sur la connexion de protocole TCP non protégée ;
recevoir une demande de mise à jour de localisation en provenance de l'équipement UE sur la connexion de protocole TCP non protégée ;
acheminer la demande de mise à jour de localisation au noeud à commutation de circuit 3GPP ;
recevoir une demande d'authentification en provenance du noeud à commutation de circuit 3GPP ;
acheminer la demande d'authentification à l'équipement UE sur la connexion de protocole TCP non protégée, l'équipement UE étant apte à recevoir la demande d'authentification et à calculer la clé et un résultat ;
recevoir une réponse d'authentification en provenance de l'équipement UE sur la connexion de protocole TCP non protégée, où la réponse d'authentification inclut le résultat calculé par l'équipement UE ;
acheminer la réponse d'authentification au noeud à commutation de circuit 3GPP ;
recevoir une commande de mode de sécurité - chiffrement en provenance du noeud à commutation de circuit 3GPP ;
acheminer la commande de mode de sécurité - chiffrement à l'équipement UE sur la connexion de protocole TCP non protégée, l'équipement UE étant apte à recevoir la commande de mode de sécurité - chiffrement et à utiliser la clé en vue de calculer la clé prépartagée ; et
calculer la clé prépartagée en utilisant la clé dérivée par l'équipement UE.

11. Contrôleur VANC selon la revendication 7, dans lequel le noeud à commutation de circuit 3GPP est un centre de commutation du service des mobiles, MSC, et la clé est une clé Kc.

12. Contrôleur VANC selon la revendication 7, dans lequel le noeud à commutation de circuit 3GPP est un centre de commutation du service des mobiles, MSC, et la clé inclut une clé de chiffrement CK et une clé d'intégrité IK.

13. Procédé mise en oeuvre par un équipement d'utilisateur, UE (604), pour fournir une sécurité pour du trafic voix sur évolution à long terme par accès générique, VoLGA, avec un contrôleur de réseau d'accès VoLGA, VANC (602), qui est également en communication avec un noeud à commutation de circuit de projet de partenariat de troisième génération 3GPP (606), le procédé comportant les étapes ci-dessous consistant à
établir une connexion de protocole de commande de transmission TCP non protégée auprès du contrôleur VANC ;
calculer une clé prépartagée en utilisant une clé qui a été dérivée au cours d'une authentification avec le noeud à commutation de circuit 3GPP utilisant la connexion de protocole TCP non protégée, où le contrôleur VANC présente également la clé prépartagée ; et
établir une connexion de sécurité de la couche de transport, TLS, auprès du contrôleur VANC, en utilisant la clé prépartagée, où la connexion de sécurité TLS fournit une sécurité au trafic VoLGA associé au contrôleur VANC.

14. Procédé selon la revendication 13, dans lequel l'étape de calcul comporte en outre les étapes ci-dessous consistant à :
s'enregistrer auprès du contrôleur VANC ;
envoyer une demande de mise à jour de localisation par le biais du contrôleur VANC au noeud à commutation de circuit 3GPP ;
recevoir une demande d'authentification en provenance du noeud 3GPP par le biais du contrôleur VANC ;
calculer la clé et un résultat ;
envoyer une réponse d'authentification incluant le résultat au noeud à commutation de circuit 3GPP par le biais du contrôleur VANC ;
recevoir une commande de mode de sécurité - chiffrement en provenance du noeud à commutation de circuit 3GPP par le biais du contrôleur VANC ; et
calculer la clé prépartagée sur la base de la clé.

15. Procédé selon la revendication 13, dans lequel la clé est une clé Kc lorsque le noeud à commutation de circuit 3GPP est un centre de commutation du service des mobiles, MSC.

16. Procédé selon la revendication 13, dans lequel la clé inclut une clé de chiffrement CK et une clé d'intégrité IK lorsque le noeud à commutation de circuit 3GPP est un centre de commutation du service des mobiles, MSC.

17. Équipement d'utilisateur, UE (604), apte à fournir une sécurité pour du trafic voix sur évolution à long terme par accès générique, VoLGA, avec un contrôleur de réseau d'accès VoLGA, VANC (602) qui est également en communication avec un noeud à commutation de circuit de projet de partenariat de troisième génération 3GPP (606), l'équipement UE comportant :
un processeur (612) ; et
une mémoire (614) apte à stocker des instructions exécutables par un processeur, où le processeur est apte à s'interfacer avec la mémoire, et à exécuter les instructions exécutables par un processeur pour :
établir une connexion de protocole de commande de transmission TCP non protégée auprès du contrôleur VANC ;
calculer une clé prépartagée en utilisant une clé qui a été dérivée au cours d'une authentification avec le noeud à commutation de circuit 3GPP utilisant la connexion de protocole TCP non protégée, où le contrôleur VANC présente également la clé prépartagée ; et
établir une connexion de sécurité de la couche de transport, TLS, auprès du contrôleur VANC en utilisant la clé prépartagée, où la connexion de sécurité TLS fournit une sécurité au trafic VoLGA associé au contrôleur VANC.

18. Équipement UE selon la revendication 17, dans lequel le processeur est en outre apte à exécuter les instructions exécutables par un processeur et à calculer la clé prépartagée en :
s'enregistrant auprès du contrôleur VANC ;
envoyant une demande de mise à jour de localisation par le biais du contrôleur VANC au noeud à commutation de circuit 3GPP ;
recevant une demande d'authentification en provenance du noeud 3GPP par le biais du contrôleur VANC ;
calculant la clé et un résultat ;
envoyant une réponse d'authentification incluant le résultat au noeud à commutation de circuit 3GPP par le biais du contrôleur VANC ;
recevant une commande de mode de sécurité - chiffrement en provenance du noeud à commutation de circuit 3GPP par le biais du contrôleur VANC ; et
calculant la clé pré-partagée sur la base de la clé.

19. Équipement UE selon la revendication 17, dans lequel la clé est une clé Kc lorsque le noeud à commutation de circuit 3GPP est un centre de commutation du service des mobiles, MSC.

20. Équipement UE selon la revendication 17, dans lequel la clé inclut une clé de chiffrement CK et une clé d'intégrité IK lorsque le noeud à commutation de circuit 3GPP est un centre de commutation du service des mobiles, MSC.
